# EUROPÄISCHE PATENTSCHRIFT

(11) **EP 0 954 690 B1**
(45) Veröffentlichungstag und Bekanntmachung des Hinweises auf die Patenterteilung: **29.03.2006**
(21) Anmeldenummer: 98965078.3
(22) Anmeldetag: 18.11.1998
(51) Int. Cl.: F02D 41/34

(54) **VERFAHREN ZUM BETREIBEN EINER BRENNKRAFTMASCHINE INSBESONDERE EINES KRAFTFAHRZEUGS**
METHOD FOR OPERATING AN INTERNAL COMBUSTION ENGINE, ESPECIALLY OF A MOTOR VEHICLE
MODE DE FONCTIONNEMENT D'UN MOTEUR A COMBUSTION INTERNE NOTAMMENT D'UN VEHICULE AUTOMOBILE

(30) Priorität: 22.11.1997 DE 19751887
(43) Veröffentlichungstag der Anmeldung: 10.11.1999
(73) Patentinhaber: ROBERT BOSCH GMBH, 70442 Stuttgart (DE)
(72) Erfinder: MENTGEN, Dirk, D-71701 Schwieberdingen (DE); MALLEBREIN, Georg, D-70825 Korntal-Münchingen (DE)
(86) Internationale Anmeldenummer: PCT/DE1998/003402
(87) Internationale Veröffentlichungsnummer: WO 1999/027245

(56) Entgegenhaltungen:
- WO-A-91/17350
- DE-A- 4 332 171
- DE-A- 19 612 150
- DE-C- 4 120 116
- PATENT ABSTRACTS OF JAPAN vol. 009, no. 003 (M-349), 9. Januar 1985 & JP 59 155540 A (NIHON DENSHI KIKI KK), 4. September 1984

## Beschreibung

### Stand der Technik

Die Erfindung betrifft ein Verfahren zum Betreiben einer Brennkraftmaschine insbesondere eines Kraftfahrzeugs, bei dem Kraftstoff entweder in einer ersten Betriebsart während einer Verdichtungsphase oder in einer zweiten Betriebsart während einer Ansaugphase direkt in einen Brennraum eingespritzt wird, und bei dem die in den Brennraum einzuspritzende Kraftstoffmasse in den beiden Betriebsarten unter anderem in Abhängigkeit von einem berechneten, von der Brennkraftmaschine abzugebendem Sollmoment ermittelt wird. Des weiteren betrifft die Erfindung eine Brennkraftmaschine insbesondere für ein Kraftfahrzeug, mit einem Einspritzventil, mit dem Kraftstoff entweder in einer ersten Betriebsart während einer Verdichtungsphase oder in einer zweiten Betriebsart während einer Ansaugphase direkt in einen Brennraum einspritzbar ist, und mit einem Steuergerät zur Ermittlung der in den Brennraum einzuspritzenden Kraftstoffmasse in den beiden Betriebsarten unter anderem in Abhängigkeit von einem berechneten, von der Brennkraftmaschine abzugebendem Sollmoment.

Derartige Systeme zur direkten Einspritzung von Kraftstoff in den Brennraum einer Brennkraftmaschine sind z.B. aus der DE 196 12 150 A bekannt.

Es wird dabei als erste Betriebsart ein sogenannter Schichtbetrieb und als zweite Betriebsart ein sogenannter Homogenbetrieb unterschieden. Der Schichtbetrieb wird insbesondere bei kleineren Lasten verwendet, während der Homogenbetrieb bei größeren, an der Brennkraftmaschine anliegenden Lasten zur Anwendung kommt. Im Schichtbetrieb wird der Kraftstoff während der Verdichtungsphase der Brennkraftmaschine in den Brennraum, und zwar dort in die unmittelbare Umgebung einer Zündkerze eingespritzt. Dies hat zur Folge, daß keine gleichmäßige Verteilung des Kraftstoffs in dem Brennraum mehr erfolgen kann. Der Vorteil des Schichtbetriebs liegt darin, daß mit einer sehr geringen Kraftstoffmasse die anliegenden kleineren Lasten von der Brennkraftmaschine ausgeführt werden können. Größere Lasten können allerdings nicht durch den Schichtbetrieb erfüllt werden. Im für derartige größere Lasten vorgesehenen Homogenbetrieb wird der Kraftstoff während der Ansaugphase der Brennkraftmaschine eingespritzt, so daß eine Verwirbelung und damit eine Verteilung des Kraftstoffs in dem Brennraum noch ohne weiteres erfolgen kann. Insoweit entspricht der Homogenbetrieb etwa der Betriebsweise von Brennkraftmaschinen, bei denen in herkömmlicher Weise Kraftstoff in das Ansaugrohr eingespritzt wird.

In beiden Betriebsarten, also im Schichtbetrieb und im Homogenbetrieb, wird die einzuspritzende Kraftstoffmasse von einem Steuergerät in Abhängigkeit von einer Mehrzahl von Parametern auf einen im Hinblick auf Kraftstoffeinsparung, Abgasreduzierung und dergleichen optimalen Wert gesteuert und/oder geregelt. Diese Steuerung und/oder Regelung ist dabei unter anderem abhängig von einem Sollmoment, das von dem Steuergerät berechnet wird. Das Sollmoment stellt das von der Brennkraftmaschine insgesamt abzugebende Moment dar, also dasjenige Moment, das die Brennkraftmaschine erzeugen soll.

Insbesondere im Leerlauf der Brennkraftmaschine ist es erwünscht, daß die Drehzahl der Brennkraftmaschine möglichst konstant ist. Aus der deutschen Offenlegungsschrift DE 29 18 135 A1 ist hierzu ein Verfahren bekannt, mit dem der Leerlauf der Brennkraftmaschine stabilisiert werden kann. Bei diesem Verfahren wird die Drehzahl der Brennkraftmaschine über eine Verstellung des Zündzeitpunkts beeinflußt und damit etwa konstant gehalten. Das bekannte Verfahren ist jedoch nur bei einer Brennkraftmaschine anwendbar, bei der in herkömmlicher Weise Kraftstoff in das Ansaugrohr eingespritzt wird.

Bei der Brennkraftmaschine der eingangs genannten Art ist insbesondere in der ersten Betriebsart, also im Schichtbetrieb, das von der Brennkraftmaschine erzeugte Istmoment und damit die Drehzahl der Brennkraftmaschine im wesentlichen nur von der eingespritzten Kraftstoffmasse abhängig. Eine Veränderung des Zündzeitpunkts ist nicht in gleicher Weise wie beim Homogenbetrieb möglich, da sich dadurch die Entflammbedingungen ändern würden. Aus diesem Grund ist das bekannte Verfahren bei der Brennkraftmaschine der eingangs genannten Art nicht sinnvoll einsetzbar.

Weiterer Stand der Technik ist aus der DE 41 20 116 A bekannt, bei der die Drehzahl der Brennkraftmaschine erst am Ende des Verfahrens zur Ermittlung der Betätigungsimpulse für das Einspritzventil berücksichtigt wird.

Aufgabe der Erfindung ist es, ein Verfahren zum Betreiben einer Brennkraftmaschine zu schaffen, mit dem insbesondere im Leerlauf der Brennkraftmaschine eine möglichst konstante Drehzahl erreichbar ist.

Bei einem Verfahren der eingangs genannten Art wird diese Aufgabe erfindungsgemäß durch die Merkmale des Anspruchs 1 gelöst. Bei einer entsprechenden Brennkraftmaschine wird die Aufgabe durch die Merkmale des Anspruchs 11 gelöst.

Im Zeitpunkt der Umrechnung der Einspritzdauer in den Einspritzwinkel weist die Brennkraftmaschine eine bestimmte Drehzahl auf. Nimmt danach die Drehzahl beispielsweise ab, so hat dies keine Auswirkung mehr auf den berechneten Einspritzwinkel. Der berechnete Einspritzwinkel bleibt also gleich. Aufgrund der geringeren Drehzahl wird dieser Einspritzwinkel nunmehr langsamer durchlaufen als bei derjenigen Drehzahl, bei der die Umrechnung erfolgt ist. Dies bedeutet, daß sich die Einspritzdauer vergrößert. Es wird somit mehr Kraftstoff eingespritzt als an sich vorgesehen war. Diese Einspritzung von mehr Kraftstoff hat zur Folge, daß die Brennkraftmaschine wieder beschleunigt und damit die Drehzahl erhöht wird.

Durch die Erfindung wird somit erreicht, daß die Drehzahl der Brennkraftmaschine weitgehend konstant gehalten wird. Dabei ist es nicht erforderlich, daß das Steuergerät korrigierend in die Einspritzung von Kraftstoff eingreifen muß, sondern die erfindungsgemäße Drehzahlstabilisierung erfolgt selbsttätig bzw. automatisch ohne jegliches Zutun des Steuergeräts. Die Erfindung stellt somit ein Verfahren zur Verfügung, das insbesondere im Leerlauf der Brennkraftmaschine deren Drehzahl schnell und genau auf einen etwa konstanten Wert steuern und/oder regeln kann. Darüberhinaus kann die Erfindung auch dann angewendet werden, wenn beispielsweise bei einem über eine längere Zeit anliegenden Sollmoment eine im wesentlichen konstante Drehzahl der Brennkraftmaschine erwünscht ist.

Bei einer vorteilhaften Weiterbildung der Erfindung wird entweder ein Einspritzbeginn als Winkelgröße vorgegeben und ein Einspritzende in Abhängigkeit von dem Einspritzwinkel ermittelt, oder es wird das Einspritzende als Winkelgröße vorgegeben und der Einspritzbeginn in Abhängigkeit von dem Einspritzwinkel ermittelt. Auf diese Weise kann in Abhängigkeit von dem bei der jeweiligen Brennkraftmaschine vorgegebenen Wert über den Einspritzwinkel der jeweils andere Wert in einfacher Weise berechnet werden.

Bei einer vorteilhaften Ausgestaltung der Erfindung wird die Einspritzdauer nur teilweise in den Einspritzwinkel umgerechnet. Auf diese Weise wird erreicht, daß beispielsweise bei einer Verringerung der Drehzahl nach der Umrechnung des Teils der Einspritzdauer in den Einspritzwinkel die sich ergebende Einspritzung von mehr Kraftstoff nicht so stark vergrößert wird als bei einer vollständigen Umrechnung. Daraus ergibt sich eine geringere Beschleunigung und damit Erhöhung der Drehzahl der Brennkraftmaschine als bei einer Umrechnung der gesamten Einspritzdauer in den Einspritzwinkel. Es wird somit eine zu starke Korrektur der Drehzahl und ein mögliches Überschwingen zu einer zu hohen Drehzahl der Brennkraftmaschine vermieden.

Bei einer vorteilhaften Ausgestaltung der Erfindung wird aus dem Einspritzbeginn als Winkelgröße in Abhängigkeit von der Drehzahl der Brennkraftmaschine ein Einspritzbeginn als Zeitdauer ermittelt, und es wird die Einspritzung von Kraftstoff nach Ablauf dieser Zeitdauer begonnen. Auf diese Weise wird erreicht, daß beispielsweise bei einer Verringerung der Drehzahl nach der Umrechnung der Einspritzdauer in den Einspritzwinkel die sich ergebende Einspritzung von mehr Kraftstoff weiter erhöht wird. Daraus ergibt eine weitere Beschleunigung und damit Erhöhung der Drehzahl der Brennkraftmaschine. Dadurch ist es möglich, eine starke Korrektur der Drehzahl der Brennkraftmaschine zu erreichen.

Bei einer vorteilhaften Weiterbildung der Erfindung wird der Einspritzbeginn als Winkelgröße nur teilweise in den Einspritzbeginn als Zeitdauer umgerechnet. Auf diese Weise kann die Beschleunigung der Drehzahl der Brennkraftmaschine an die jeweiligen Bedingungen angepaßt werden.

Besonders zweckmäßig ist es, wenn die Erfindung in der ersten Betriebsart der Brennkraftmaschine und/oder während des Starts der Brennkraftmaschine und/oder zur Steuerung und/oder Regelung der Leerlaufdrehzahl der Brennkraftmaschine angewendet wird. Insbesondere wenn die Brennkraftmaschine im Leerlauf in der ersten Betriebsart, also im Schichtbetrieb betrieben wird, kann mit der Erfindung die erwünschte konstante Drehzahl der Brennkraftmaschine bei gleichzeitiger Kraftstoffeinsparung und geringer Schadstoffemission erreicht werden.

Von besonderer Bedeutung ist die Realisierung des erfindungsgemäßen Verfahrens in der Form eines elektrischen Speichermediums, das für ein Steuergerät einer Brennkraftmaschine insbesondere eines Kraftfahrzeugs vorgesehen ist. Dabei ist auf dem elektrischen Speichermedium ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem elektrischen Speichermedium abgespeichertes Programm realisiert, so daß dieses mit dem Programm versehene Speichermedium in gleicher Weise die Erfindung darstellt wie das Verfahren, zu dessen Ausführung das Programm geeignet ist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt ein schematisches Blockschaltbild eines Ausführungsbeispiels einer erfindungsgemäßen Brennkraftmaschine eines Kraftfahrzeugs, und
- Figur 2: zeigt ein schematisches Blockschaltbild eines Ausführungsbeispiels eines erfindungsgemäßen Verfahrens zum Betreiben der Brennkraftmaschine nach der Figur 1.

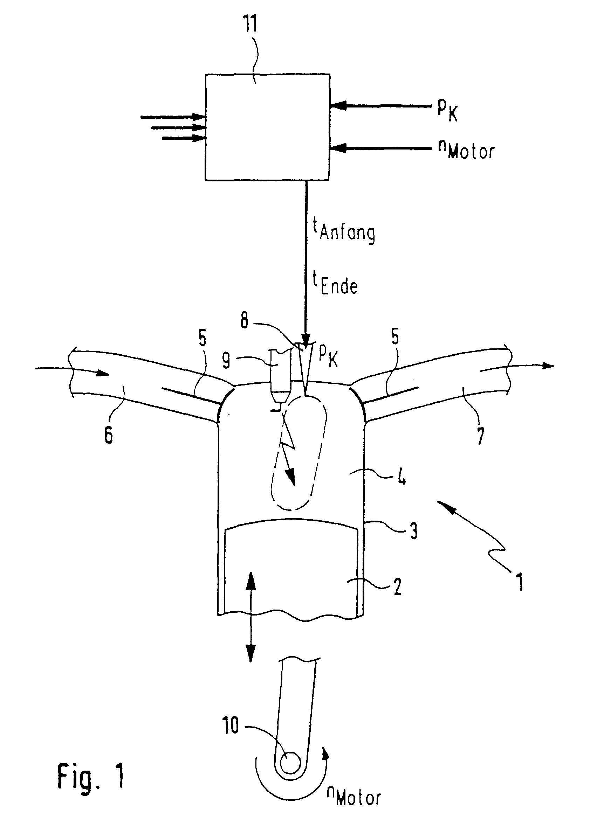

In der Figur 1 ist eine Brennkraftmaschine 1 dargestellt, bei der ein Kolben 2 in einem Zylinder 3 hin- und herbewegbar ist. Der Zylinder 3 ist mit einem Brennraum 4 versehen, an den über Ventile 5 ein Ansaugrohr 6 und ein Abgasrohr 7 angeschlossen sind. Des weiteren sind dem Brennraum 4 ein Einspritzventil 8 und eine Zündkerze 9 zugeordnet. Dem Einspritzventil 8 ist ein Drucksensor zugeordnet, der in Abhängigkeit von dem auf den Kraftstoff einwirkenden Druck ein Signal p_{K} erzeugt.

In einer ersten Betriebsart, dem Schichtbetrieb der Brennkraftmaschine 1, wird der Kraftstoff von dem Einspritzventil 8 während einer durch den Kolben 2 hervorgerufenen Verdichtungsphase in den Brennraum 4 eingespritzt, und zwar örtlich in die unmittelbare Umgebung der Zündkerze 9 sowie zeitlich unmittelbar vor dem oberen Totpunkt des Kolbens 2. Dann wird mit Hilfe der Zündkerze 9 der Kraftstoff entzündet, so daß der Kolben 2 in der nunmehr folgenden Arbeitsphase durch die Ausdehnung des entzündeten Kraftstoffs angetrieben wird.

In einer zweiten Betriebsart, dem Homogenbetrieb der Brennkraftmaschine 1, wird der Kraftstoff von dem Einspritzventil 8 während einer durch den Kolben 2 hervorgerufenen Ansaugphase in den Brennraum 4 eingespritzt. Durch die gleichzeitig angesaugte Luft wird der eingespritzte Kraftstoff verwirbelt und damit in dem Brennraum 4 im wesentlichen gleichmäßig verteilt. Danach wird das Kraftstoff-Luft-Gemisch während der Verdichtungsphase verdichtet, um dann von der Zündkerze 9 entzündet zu werden. Durch die Ausdehnung des entzündeten Kraftstoffs wird der Kolben 2 angetrieben.

Im Schichtbetrieb, wie auch im Homogenbetrieb wird durch den angetriebenen Kolben eine Kurbelwelle 10 in eine Drehung versetzt, über die letztendlich die Räder des Kraftfahrzeugs angetrieben wird. Der Kurbelwelle 10 ist ein Drehzahlsensor zugeordnet, der in Abhängigkeit von der Drehung der Kurbelwelle 10 ein Signal N_{Motor} erzeugt.

Die im Schichtbetrieb und im Homogenbetrieb von dem Einspritzventil 8 in den Brennraum 4 eingespritzte Kraftstoffmasse wird von einem Steuergerät 11 insbesondere im Hinblick auf einen geringen Kraftstoffverbrauch und/oder eine geringe Abgasentwicklung gesteuert und/oder geregelt. Zu diesem Zweck ist das Steuergerät 11 mit einem Mikroprozessor versehen, der in einem Speichermedium, insbesondere in einem Read-Only-Memory ein Programm abgespeichert hat, das dazu geeignet ist, die genannte Steuerung und/oder Regelung durchzuführen.

Das Steuergerät 11 ist von Eingangssignalen beaufschlagt, die mittels Sensoren gemessene Betriebsgrößen der Brennkraftmaschine darstellen. Beispielsweise ist das Steuergerät 11 mit dem Drucksensor und dem Drehzahlsensor verbunden und erhält somit die Signale p_{K} und n_{Motor}. Das Steuergerät 11 erzeugt Ausgangssignale, mit denen über Aktoren das Verhalten der Brennkraftmaschine entsprechend der erwünschten Steuerung und/oder Regelung beeinflußt werden kann. Beispielsweise ist das Steuergerät 11 mit dem Einspritzventil 8 und der Zündkerze 9 verbunden und erzeugt die zu deren Ansteuerung erforderlichen Signale.

Die Steuerung und/oder Regelung beispielsweise der in den Brennraum 4 eingespritzen Kraftstoffmasse wird von dem Steuergerät 11 in beiden Betriebsarten unter anderem in Abhängigkeit von einem Sollmoment Mₛₒₗₗ durchgeführt. Dieses Sollmoment stellt dabei dasjenige Moment dar, das die Brennkraftmaschine 1 abgeben bzw. erzeugen soll. Das abzugebende Sollmoment Mₛₒₗₗ wird von dem Steuergerät 11 in Abhängigkeit von der von dem Fahrer angeforderten Leistung und von weiteren Leistungsanforderungen der Brennkraftmaschine 1 berechnet. Die von dem Fahrer angeforderte Leistung ergibt sich aus der Stellung eines Fahrpedalsensors und sonstige Leistungsanforderungen beispielsweise von einer Klimaanlage können aus entsprechenden Veränderungen der Drehzahl n_{Motor} der Brennkraftmaschine 1 abgeleitet werden.

Im Leerlauf der Brennkraftmaschine 1 ergibt sich das Sollmoment Mₛₒₗₗ gerade so, daß die Leistungsanforderungen der Brennkraftmaschine 1 erfüllt werden, ansonsten aber die Drehzahl n_{Motor} der Brennkraftmaschine 1 möglichst gering ist. Eine weitere Anforderung besteht im Leerlauf der Brennkraftmaschine 1 darin, daß die Drehzahl n_{Motor} möglichst konstant ist, also keine Drehzahlschwankungen oder dergleichen auftreten.

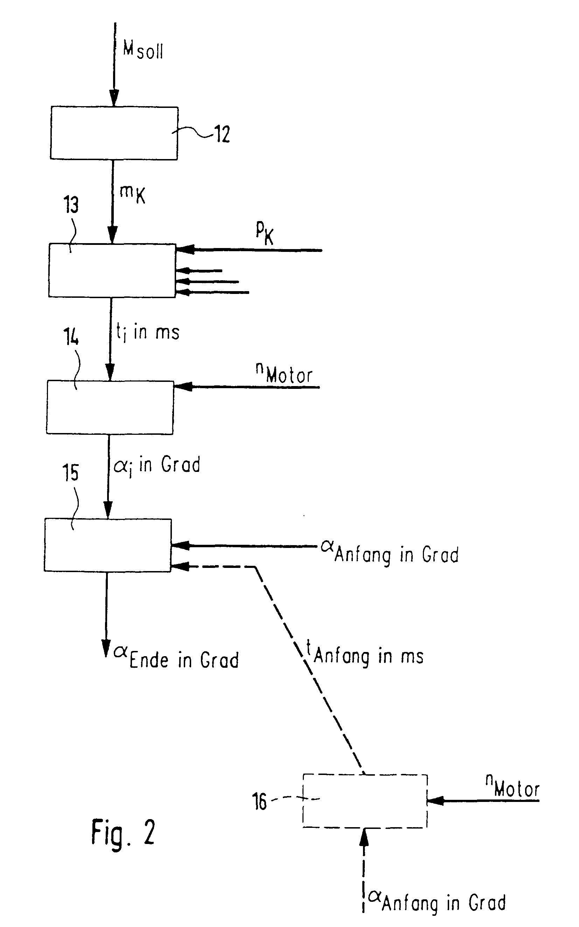

In der Figur 2 ist ein Verfahren dargestellt, mit dem die Brennkraftmaschine 1 der Figur 1 gesteuert und/oder gereaelt wird. Dieses Verfahren wird von dem Steuergerät 11 durchgeführt.

In der Figur 2 wird aus dem Sollmoment Mₛₒₗₗ von einem Block 12 eine einzuspritzende Kraftstoffmasse m_{K} ermittelt. Diese Berechnung ist dabei in bekannter Weise abhängig von einer Vielzahl von Parametern der Brennkraftmaschine 1.

Dann wird von einem Block 13 aus der einzuspritzenden Kraftstoffmasse m_{K} eine Einspritzdauer tᵢ ermittelt, die in einer Zeitgröße, z.E. in ms angegeben wird. Die Berechnung der Einspritzdauer tᵢ erfolgt dabei insbesondere in Abhängigkeit von dem auf den Kraftstoff einwirkenden Druck p_{K} sowie von weiteren Parametern der Brennkraftmaschine 1 bzw. insbesondere des Einspeitzventils 8.

Von einem Block 14 wird in einem bestimmten Zeitpunkt T₀ die Einspritzdauer tᵢ in einen Einspritzwinkel αᵢ umgerechnet, der in einer Winkelgröße, z.B. Grad angegeben wird. Es wird also die Einspritzdauer tᵢ in ms in den Einspritzwinkel α₁ in Grad umgerechnet. Bei dem bestimmten Zeitpunkt T₀ handelt es sich um eine bestimmte Winkelstellung der Kurbelwelle 10, z.B. um 0 Grad Kurbelwellenwinkel. Die Umrechnung erfolgt dabei in Abhängigkeit von der Drehzahl n_{Mot} der Brennkraftmaschine 1 in dem genannten Zeitpunkt.

Es wird nun davon ausgegangen, daß der Beginn einer Einspritzung von Kraftstoff in den Brennraum 4 der Brennkraftmaschine 1 vorgegeben ist. Dies ist in der Figur 2 mit einem Winkel für den Einspritzbeginn α_{Anfang} in Grad angegeben, der ausgehend von z.B. 0 Grad Kurbelwellenwinkel berechnet wird. Das Einspritzventil 8 wird also von dem Steuergerät 11 genau dann geöffnet, wenn sich die Kurbelwelle 10 ausgehend von 0 Grad Kurbelwellenwinkel um den Winkel für den Einspritzbeginn α_{Anfang} gedreht hat.

Ein Block 15 berechnet aus dem Winkel für den Einspritzbeginn α_{Anfang} und dem Einspritzwinkel α₁ durch Addition einen Winkel für das Einspritzende α_{Ende} in Grad. Das Einspritzventil 8 wird von dem Steuergerät 11 genau dann wieder geschlossen, wenn sich die Kurbelwelle 10 ausgehend von 0 Grad Kurbelwellenwinkel um den Winkel für das Einspritzende α_{Ende} gedreht hat.

Wie erwähnt, erfolgt die drehzahlabhängige Umrechnung der Einspritzdauer tᵢ in den Einspritzwinkel α₁ im Zeitpunkt T₀ bei 0 Grad Kurbelwellenwinkel. Erhöht sich danach die Drehzahl n_{Motor} der Brennkraftmaschine 1 z.B. aufgrund von geringeren Leistungsanforderungen, so hat dies keinen Einfluß mehr auf die genannte Berechnung des Einspritzwinkel α₁. Der Einspritzwinkel tᵢ bleibt gleich. Die erhöhte Drehzahl n_{Motor} hat jedoch zur Folge, daß sich die Kurbelwelle 10 schneller dreht, und daß damit der unveränderte Einspritzwinkel α₁ schneller durchlaufen wird. Dies bedeutet, daß die tatsächliche Einspritzdauer tᵢ aufgrund des schnelleren Durchlaufs kürzer wird als an sich vorgesehen bzw. vorausberechnet. Die kürzere Einspritzdauer tᵢ stellt jedoch gleichzeitig eine geringere tatsächlich eingespritzte Kraftstoffmasse m_{K} dar, als dies an sich vorgesehen bzw. vorausberechnet war. Durch die geringere Kraftstoffmasse m_{K} gibt jedoch die Brennkraftmaschine 1 ein geringeres tatsächliches Istmoment ab, was wiederum gleichbedeutend ist mit einem Absinken der Drehzahl n_{Motor} der Brennkraftmaschine. Die anfängliche Erhöhung der Drehzahl n_{Motor} der Brennkraftmaschine 1 wird somit selbsttätig wieder erniedrigt. Insgesamt wird somit die Drehzahl n_{Motor} der Brennkraftmaschine 1 automatisch stabilisiert und es ergibt sich eine im wesentlichen etwa konstante Drehzahl n_{Mot} der Brennkraftmaschine 1.

Das nachfolgende Beispiel soll das beschriebene verfahren nochmals verdeutlichen:

| | |
|---|---|
| Drehzahl n_{Motor} | 1000 U/min |
| Drehzahlbeschleunigung | 200 U/min/s |
| Zeitpunkt T₀ der Drehzahlerfassung | 0 Grad KW |
| Einspritzdauer tᵢ als Zeitgröße | 3 ms |
| Einspritzwinkel αᵢ als Winkelgröße | 18 Grad KW |
| Einspritzbeginn α_{Anfang} | 270 Grad KW |
| Einspritzende α_{Ende} | 288 Grad KW |
| tatsächliche Einspritzdauer tᵢ | 2,9725 ms |
| relative Änderung von tᵢ | - 0,92 %. |

Weist die Brennkraftmaschine 1 nach der Umrechnung der Einspritzdauer tᵢ in den Einspritzwinkel αᵢ anstelle der Drehzahlbeschleunigung eine Drehzahlverzögerung auf, so wird der Einspritzwinkel αᵢ langsamer durchlaufen als an sich vorgesehen. Dies stellt eine Verlängerung der Einspritzdauer t₁ dar und damit die Einspritzung von mehr Kraftstoff dar. Auf diese Weise wird die Brennkraftmaschine 1 beschleunigt und damit die Drehzahl n_{Motor} automatisch stabilisiert.

Es ist möglich, daß sich die beschriebene selbsttätige Korrektur der Drehzahl n_{Motor} der Brennkraftmaschine 1 zu stark auswirkt und die Drehzahl n_{Motor} damit in die jeweils andere Richtung überschwingt, daß also im zuerst beschriebenen Fall die tatsächliche Einspritzdauer tᵢ so stark verkürzt wird, daß eine Drehzahlverzögerung erfolgt, die größer ist als die anfängliche Drehzahlbeschleunigung. Damit dies vermieden wird, ist es möglich, die Einspritzdauer tᵢ nur teilweise in den Einspritzwinkel αᵢ umzurechnen. Es wird also beispielsweise die erste Hälfte der Einspritzdauer t₁ als Zeitgröße beibehalten und es wird nur die zweite Hälfte der Einspritzdauer tᵢ in den Einspritzwinkel α₁ als Winkelgröße umgerechnet. Dies hat zur Folge, daß die Verkürzung der tatsächlichen Einspritzdauer tᵢ nur aus der umgerechneten zweiten Hälfte des Einspritzwinkels αᵢ resultiert und damit weniger stark ausfällt.

Ebenfalls ist möglich, daß sich die beschriebene selbsttätige Korrektur der Drehzahl n_{Motor} der Brennkraftmaschine 1 zu gering auswirkt, so daß eine Stabilisierung der Drehzahl n_{Motor} nicht eintritt. In diesem Fall ist es möglich, das beschriebene Verfahren entsprechend der gestrichelten Ausführung der Figur 2 abzuwandeln.

Es wird also von einem Block 16 der Winkel für den Einspritzbeginn α_{Anfang} in Abhängigkeit von der Drehzahl n_{Motor} der Brennkraftmaschine 1 im Zeitpunkt T₀, also bei 0 Grad Kurbelwellenwinkel, in eine Zeitdauer für den Einspritzbeginn t_{Anfang} umgerechnet. Der Beginn der Einspritzung, also das Öffnen des Einspritzventils 8 wird dann in Abhängigkeit von der Zeitdauer für den Einspritzbeginn t_{Anfang} gesteuert, und nicht, wie bisher, in Abhängigkeit von dem entsprechenden Winkel. Es wird also nach dem Durchlauf der Kurbelwelle 10 durch 0 Grad Kurbelwellenwinkel die Zeitdauer für den Einspritzbeginn t_{Anfang} gemessen, um nach deren Ablauf das Einspritzventil 8 zu öffnen.

Ergibt sich nun während dieser Zeitdauer bis zum Einspritzbeginn t_{Anfang} eine Beschleunigung der Drehzahl n_{Motor} der Brennkraftmaschine 1, so hat dies zur Folge, daß sich die Kurbelwelle 10 schneller dreht. Dies bedeutet, daß sich die Kurbelwelle 10 während der Zeitdauer bis zum Einspritzbeginn t_{Anfang} um einen größeren Winkel dreht als dies an sich vorgesehen bzw. vorausberechnet war. Die Einspritzung beginnt also bei einem späteren Kurbelwellenwinkel als an sich vorgesehen. Der Winkel für das Einspritzende α_{Ende} bleibt jedoch gleich. Dies hat zur Folge, daß der Einspritzwinkel α₁ und damit auch die Einspritzdauer tᵢ kleiner wird. Es wird also weniger Kraftstoff in den Brennraum 4 der Brennkraftmaschine 1 eingespritzt, so daß sich das Istmoment und damit die Drehzahl n_{Motor} der Brennkraftmaschine 1 verringert.

Das nachfolgende Beispiel soll die beschriebene Änderung des Verfahren nochmals verdeutlichen:

| | |
|---|---|
| Drehzahl n_{Motor} | 1000 U/min |
| Drehzahlbeschleunigung | 200 U/min/s |
| Zeitpunkt T₀ der Drehzahlerfassung | 0 Grad KW |
| Einspritzdauer tᵢ als Zeitgröße | 3 ms |
| Einspritzwinkel αᵢ als Winkelgröße | 18 Grad KW |
| Einspritzbeginn α_{Anfang} als Winkelgröße | 270 Grad KW |
| Einspritzbeginn t_{Anfang} als Zeitdauer | 45 ms |
| Einspritzende α_{Ende} | 288 Grad KW |
| tatsächliche Einspritzdauer tᵢ | 2,7718 ms |
| relative Änderung von tᵢ | - 7,6 %. |

Anstelle der Umrechnung des gesamten Winkels für den Einspritzbeginn α_{Anfang} in eine entsprechende Zeitdauer ist es auch möglich, nur einen Teil dieses Winkels in die Zeitdauer für den Einspritzbeginn t_{Anfang} umzurechnen. Damit kann die Korrketur der Drehzahl n_{Motor} der Brennkraftmaschine 1 an die jeweils vorliegenden Bedingungen angepaßt werden.

## Patentansprüche

1. Verfahren zum Betreiben einer Brennkraftmaschine (1) bei dem Kraftstoff entweder in einer ersten Betriebsart während einer Verdichtungsphase oder in einer zweiten Betriebsart während einer Ansaugphase direkt in einen Brennraum (4) eingespritzt wird, und bei dem die in den Brennraum (4) einzuspritzende Kraftstoffmasse (m_{K}) in den beiden Betriebsarten unter anderem in Abhängigkeit von einem berechneten, von der Brennkraftmaschine (1) abzugebendem Sollmoment (Mₛₒₗₗ) ermittelt wird, **dadurch gekennzeichnet, dass** aus der einzuspritzenden Kraftstoffmasse (m_{K}) eine Einspritzdauer (tᵢ in ms) ermittelt wird, dass in einem Zeitpunkt (T₀), der einer bestimmten Winkelstellung der Kurbelwelle (10) der Brennkraftmaschine (1) entspricht, aus der Einspritzdauer (tᵢ in ms) in Abhängigkeit von der Drehzahl (n_{Motor}) der Brennkraftmaschine (1) ein Einspritzwinkel (αᵢ in Grad) ermittelt wird, dass aus einem Einspritzbeginn (α_{Anfang} in Grad) als Winkelgröße in Abhängigkeit von der Drehzahl (n_{Motor}) der Brennkraftmaschine ein Einspritzbeginn (t_{Anfang} in ms) als Zeitdauer ermittelt wird, dass die Einspritzung von Kraftstoff nach Ablauf dieser Zeitdauer (t_{Anfang} in ms) begonnen wird, und dass der Kraftstoff bis zum Ablauf des Einspritzwinkels (αᵢ in Grad) eingespritzt wird.

2. Verfahren nach Anspruch 1, **dadurch gekennzeichnet, dass** entweder der Einspritzbeginn (α_{Anfang} in Grad) als Winkelgröße vorgegeben und ein Einspritzende (α_{Ende} in Grad) in Abhängigkeit von dem Einspritzwinkel (αᵢ in Grad) ermittelt wird, oder dass das Einspritzende (α_{Ende} in Grad) als Winkelgröße vorgegeben und der Einspritzbeginn (α_{Anfang} in Grad) in Abhängigkeit von dem Einspritzwinkel (αᵢ in Grad) ermittelt wird.

3. Verfahren nach einem der Ansprüche 1 oder 2, **dadurch gekennzeichnet, dass** die Einspritzdauer (tᵢ in ms) nur teilweise in den Einspritzwinkel (αᵢ in Grad) umgerechnet wird.

4. Verfahren nach einem der vorstehenden Ansprüche, **dadurch gekennzeichnet, dass** aus dem Einspritzbeginn (α_{Anfang} in Grad) als Winkelgröße nur teilweise in den Einspritzbeginn (t_{Anfang} in ms) als Zeitdauer umgerechnet wird.

5. Verfahren nach einem der vorstehenden Ansprüche, **dadurch gekennzeichnet, dass** die Einspritzdauer (tᵢ in ms) in Abhängigkeit von einem auf den Kraftstoff einwirkenden Druck (p_{K}) ermittelt wird.

6. Verfahren nach einem der vorstehenden Ansprüche, **gekennzeichnet durch** dessen Anwendung in der ersten Betriebsart der Brennkraftmaschine (1).

7. Verfahren nach einem der vorstehenden Ansprüche, **gekennzeichnet durch** dessen Anwendung während des Starts der Brennkraftmaschine (1).

8. Verfahren nach einem der vorstehenden Ansprüche, **gekennzeichnet durch** dessen Anwendung zur Steuerung und/oder Regelung der Leerlaufdrehzahl der Brennkraftmaschine (1).

9. Elektrische Speichermedium für ein Steuergerät (11) einer Brennkraftmaschine (1), **dadurch gekennzeichnet, dass** auf ihm ein Computerprogramm zur Anwendung in einem Verfahren nach einem der Ansprüche 1 bis 8 abgespeichert ist.

10. Steuergerät (11) für eine Brennkraftmaschine (1), **dadurch gekennzeichnet, dass** es zur Anwendung in einem Verfahren nach einem der Ansprüche 1 bis 8 programmiert ist.

11. Brennkraftmaschine (1), insbesondere für ein Kraftfahrzeug, mit einem Steuergerät (11), welches zur Anwendung in einem Verfahren nach einem der Ansprüche 1 bis 8 programmiert ist.

## Claims

1. Method for operating an internal combustion engine (1), in which fuel is injected directly into a combustion chamber (4), either, in a first operating mode, during a compression phase or, in a second operating mode, during an induction phase, and in which the mass of fuel (m_{K}) to be injected into the combustion chamber (4) in both operating modes is determined inter alia as a function of a calculated desired torque (M_{des}) to be output by the internal combustion engine (1), **characterized in that** an injection duration (tᵢ in ms) is determined from the mass of fuel (m_{K}) to be injected, **in that** at a point in time (T₀) which corresponds to a defined angle position of the crankshaft (10) of the internal combustion engine (1), an injection angle (αᵢ in degrees) is determined from the injection duration (tᵢ in ms) as a function of the speed (n_{engine}) of the internal combustion engine (1), **in that** a start of injection (tₛₜₐᵣₜ in ms) as a time duration is determined from a start of injection (αₛₜₐᵣₜ in degrees) as an angle variable as a function of the speed (n_{engine}) of the internal combustion engine, **in that** the injection of fuel is started after this time duration (tₛₜₐᵣₜ in ms) has elapsed, and **in that** the fuel is injected until the injection angle (αᵢ in degrees) has ended.

2. Method according to Claim 1, **characterized in that** either the start of injection (αₛₜₐᵣₜ in degrees) is predetermined as an angle variable and end of injection (α_{end} in degrees) is determined as a function of the injection angle (αᵢ in degrees), or **in that** the end of injection (α_{end} in degrees) is predetermined as an angle variable and the start of injection (αₛₜₐᵣₜ in degrees) is determined as a function of the injection angle (αᵢ in degrees).

3. Method according to one of Claims 1 or 2, **characterized in that** the duration of injection (tᵢ in ms) is only partially converted into the injection angle (αᵢ in degrees) .

4. Method according to one of the preceding claims, **characterized in that** the start of injection (αᵢ in degrees) as an angle variable is only partially converted into the start of injection (αₛₜₐᵣₜ in ms) as a duration of time.

5. Method according to one of the preceding claims, **characterized in that** the duration of injection (tᵢ in ms) is determined as a function of a pressure (p_{K}) acting on the fuel.

6. Method according to one of the preceding claims, **characterized by** its use in the first operating mode of the internal combustion engine (1).

7. Method according to one of the preceding claims, **characterized by** its use while the internal combustion engine (1) is starting up.

8. Method according to one of the preceding claims, **characterized by** its use for controlling the idling speed of the internal combustion engine (1) .

9. Electrical storage medium for a control unit (11) of an internal combustion engine (1), **characterized in that** a computer program for use in a method according to one of Claims 1 to 8 is stored on it.

10. Control unit (11) for an internal combustion engine (1), **characterized in that** it is programmed for use in a method according to one of Claims 1 to 8.

11. Internal combustion engine (1), in particular for a motor vehicle, having a control unit (11) which is programmed for use in a method according to one of Claims 1 to 8.

## Revendications

1. Procédé de gestion d'un moteur à combustion interne (1), selon lequel du carburant est injecté directement dans une chambre de combustion (4) soit dans un premier mode de fonctionnement pendant une phase de compression, soit dans un second mode de fonctionnement pendant une phase d'aspiration, et la masse de carburant (m_{c}) à injecter dans la chambre de combustion (4) est déterminée dans les deux modes de fonctionnement, entre autres en fonction d'un couple de consigne (C_{cons}) calculé, et qui doit être fourni par le moteur à combustion interne (1),
**caractérisé en ce qu'**
une durée d'injection (tᵢ en ms) est déterminée à partir de la masse de carburant (m_{c}) à injecter,
à un moment (To), qui correspond à une position angulaire déterminée du vilebrequin (10) du moteur à combustion interne (1), un angle d'injection (αᵢ) est déterminé à partir de la durée d'injection (tᵢ) en fonction de la vitesse de rotation (nₘₒₜₑᵤᵣ) du moteur à combustion interne (1),
un début d'injection (t_{début} en ms) est déterminé en tant que durée à partir d'un début d'injection (α_{début} en degrés) comme grandeur angulaire, en fonction de la vitesse de rotation (nₘₒₜₑᵤᵣ) du moteur à combustion interne,
l'injection de carburant commence lorsque cette durée (t_{début} en ms) s'est écoulée, et
le carburant est injecté jusqu'à la fin de l'angle d'injection (αᵢ en degrés).

2. Procédé selon la revendication 1,
**caractérisé en ce que**
soit le début d'injection (α_{début} en degrés) est prédéfini comme grandeur angulaire et une fin d'injection (α_{fin} en degrés) est déterminée en fonction de l'angle d'injection (αᵢ en degrés), soit la fin d'injection (α_{fin} en degrés) est prédéfinie comme grandeur angulaire et le début d'injection (α_{début} en degrés) est déterminé en fonction de l'angle d'injection (αᵢ en degrés).

3. Procédé selon l'une quelconque des revendications 1 ou 2,
**caractérisé en ce que**
la durée d'injection (tᵢ en ms) n'est convertie que partiellement en angle d'injection (αᵢ en degrés).

4. Procédé selon l'une quelconque des revendications précédentes,
**caractérisé en ce que**
le début d'injection (α_{début} en degrés) comme grandeur angulaire n'est converti que partiellement en début d'injection (t_{début} en ms) comme durée.

5. Procédé selon l'une quelconque des revendications précédentes,
**caractérisé en ce que**
la durée d'injection (tᵢ en ms) est déterminée en fonction d'une pression (p_{c}) agissant sur le carburant.

6. Procédé selon l'une quelconque des revendications précédentes,
**caractérisé par**
son utilisation dans le premier mode de fonctionnement du moteur à combustion interne (1).

7. Procédé selon l'une quelconque des revendications précédentes,
**caractérisé par**
son utilisation pendant le démarrage du moteur à combustion interne (1).

8. Procédé selon l'une quelconque des revendications précédentes,
**caractérisé par**
son utilisation pour commander et/ ou réguler le régime à vide du moteur à combustion interne (1).

9. Moyen de mémoire électrique pour un appareil de commande (11) d'un moteur à combustion interne (1),
**caractérisé en ce qu'**
un programme informatique est stocké sur celui-ci pour l'utilisation dans un procédé selon l'une quelconque des revendications 1 à 8.

10. Appareil de commande (11) pour un moteur à combustion interne (1),
**caractérisé en ce qu'**
il est programmé pour l'utilisation dans un procédé selon l'une quelconque des revendications 1 à 8.

11. Moteur à combustion interne (1), en particulier pour un véhicule automobile, avec un appareil de commande (11) qui est programmé pour l'utilisation dans un procédé selon l'une quelconque des revendications 1 à 8.
